# EUROPÄISCHE PATENTANMELDUNG

(11) **EP 2 524 592 A2**
(43) Veröffentlichungstag der Anmeldung: **21.11.2012**
(21) Anmeldenummer: 12003147.1
(22) Anmeldetag: 02.05.2012
(51) Int. Cl.: A01K 29/00

(54) **Verfahren zur Erstellung einer Verhaltensanalyse eines in einer Arena befindlichen Nagetieres und Verfahren zur Erstellung eines Abbildes des Nagetieres**

(30) Priorität: 18.05.2011 DE 102011101939
(71) Anmelder: BIOBSERVE GmbH, 53757 St. Augustin (DE)
(72) Erfinder: Schwarz, Stephan, 53123 Bonn (DE); Gutzen, Christian, 53227 Bonn (DE)
(74) Vertreter: Walther, Walther & Hinz GbR

(57) **Zusammenfassung**

Gegenstand der Erfindung ist ein Verfahren zur Erstellung eines Abbildes eines in einer Arena (1) befindlichen Nagetieres, insbesondere einer Maus oder einer Ratte, vorzugsweise zur Erstellung einer Verhaltensanalyse. Ein Verfahren zur Erstellung eines Abbildes des Nagetieres zu schaffen, so dass eine Vielzahl von Verhaltensmusters in kurzer Zeit erfasst werden, wird dadurch erreicht, dass von zwei voneinander beabstandeten Kameras (3, 4) zwei Bilder des Nagetieres erstellt werden, wobei beide Kameras (3, 4) das Nagetier und/oder die Arena von oben erfassen, dass aus den Bildern ein dreidimensionales Höhenprofil des Nagetieres erstellt wird und dass das Höhenprofil als Abbild des Nagetieres gespeichert wird.

## Beschreibung

Die vorliegende Erfindung betrifft ein Verfahren zu Erstellung einer Verhaltensanalyse eines in einer Arena befindlichen Nagetieres gemäß dem Oberbegriff des Anspruches 10 und ein Verfahren zur Erstellung eines Abbildes des Nagetieres gemäß dem Oberbegriff des Anspruches 1.

Aus der WO 2010/032247 A2 ist ein Verfahren zur Analyse des Verhaltens einer Maus in einer Arena bekannt, bei dem oberhalb der Arena eine einzelne Kamera vorgesehen ist, die in bestimmten zeitlichen Abständen Abbilder der Maus und/der Arena aus der Vogelperspektive macht. Diese Abbilder werden in einer angeschlossenen Recheneinheit ausgewertet indem aus den Abbildern Verhaltensmuster erkannt werden und indem diese Verhaltensmuster statistisch ausgewertet werden.

Dabei kann die einzelne Kamera lediglich zweidimensionale Abbilder der Maus und/oder Arena erstellen mit der Folge, dass einige Verhaltensmuster der Maus, zum Beispiel das Männchen machen (rearing), nicht erkannt werden können.

Aus der WO 2010/051164 A1 ist es bekannt zur Analyse des Verhaltens mehrerer Mäuse zwei verschiedene Kameras einzusetzen, wobei eine Kamera die Mäuse und/oder die Arena aus der Vogelperspektive aufnimmt, während die andere Kamera eine Seitenansicht aufnimmt. Beide Abbilder werden dann in einer angeschlossenen Recheneinheit ausgewertet, indem die beiden Abbilder parallel mit gespeicherten Abbildern von Verhaltensmustern verglichen werden und indem erkannte Verhaltensmuster statistisch ausgewertet werden.

Bei dem Verfahren gemäß WO 2010/051154 A1 müssen zeitgleich die Abbildungen beider Kameras ausgewertet werden, wozu eine sehr aufwendige Software erforderlich ist und wozu sehr viel Rechenzeit benötigt wird, was letztendlich zu einer langsameren Auswertung führt.

Davon ausgehend liegt der vorliegenden Erfindung die Aufgabe zu Grunde, ein Verfahren zur Erstellung einer Verhaltensanalyse und ein Verfahren Erstellung eines Abbildes des Nagetieres zu schaffen, so dass eine Vielzahl von Verhaltensmusters in kurzer Zeit erfasst werden.

Als technische Lösung dieser Aufgabe wird erfindungsgemäß eine Verfahren zur Erstellung eines Abbildes eines in einer Arena befindlichen Nagetieres mit den Merkmalen des Anspruches 1 und ein Verfahren zur Erstellung einer Verhaltensanalyse mit den Merkmalen des Anspruches 10 vorgeschlagen. Vorteilhafte Weiterbildungen dieser Verfahren sind den jeweiligen Unteransprüchen zu entnehmen.

Nach dieser technischen Lehre ausgebildete Verfahren haben den Vorteil, dass durch die Verwendung von zwei Kameras ein dreidimensionales Höhenprofil erstellt werden kann, mit dem einzelne Verhaltensmuster ermittelt werden können. Aus dem Höhenprofil können dann einzelne Körperteile wie zum Beispiel der Korpus, der Schwanz oder die Schnauzenspitze abgeleitet werden und durch die relative Zuordnung der einzelnen Körperteile, zum Beispiel durch den Abstand der einzelnen Körperteile zum Boden oder der Körperteile zueinander, können alle biologisch relevanten Verhaltensmuster erkannt werden, insbesondere auch das "Männchen machen" (rearing) oder das"Schnauze putzen".

In einer bevorzugten Ausführungsform werden mittels der beiden Kameras Oberflächenpunkte der Objekte und/oder des Nagetieres erfasst, wobei jedem Oberflächenpunkt seine Position im Raum, zum Beispiel, mittels seiner X, Y und Z Koordinaten, zugeordnet werden kann. Dies hat den Vorteil, dass hiermit die dreidimensionale Position einzelner Körperteile des Nagetieres erkannt wird, was die Bestimmung des jeweiligen Verhaltensmusters stark vereinfacht.

Aus dem Höhenprofil wird dann der Schwerpunkt des Nagetieres, die Schnauzenspitze und der Schwanzendpunkt jeweils im Raum ermittelt. Somit liegt eine exakte, dreidimensionale Position dieser Punkte im Raum vor. Diese Punkte bestimmen wesentlich das Abbild der Maus.

Das erfindungsgemäße Verfahren zur Erstellung einer Verhaltensanalyse unter Verwendung der erfindungsgemäßen Abbilder hat den Vorteil, dass die aus dem dreidimensionalen Höhenprofil erstellten Abbilder alle relevanten Verhaltensmuster erkennen lassen, so dass die Verhaltensanalyse schnell durchgeführt werden kann und mit wenig Rechenzeit auskommt.

Ein weiterer Vorteil besteht darin, dass in der zur Verfügung stehenden Zeit mehr Daten zur Auswertung bereitstehen, so dass das Analyseergebnis präziser ausfällt.

Weitere Vorteile der erfindungsgemäßen Verfahren ergeben sich aus der beigefügten Zeichnung und den nachstehend beschriebenen Ausführungsformen. Ebenso können die vorstehend genannten und die noch weiter ausgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter. Es zeigen:
- Fig. 1: ein schematisch dargestellter Aufbau einer Anlage zur Durchführung einer erfindungsgemäßen Verhaltensanalyse;
- Fig. 2: schematische Darstellung einer Kurzsequenz mit 3 Abbildern eines Nagetieres;
- Fig. 3: schematische Darstellung einer Kurzsequenz mit 4 Abbildern eines Nagetieres.

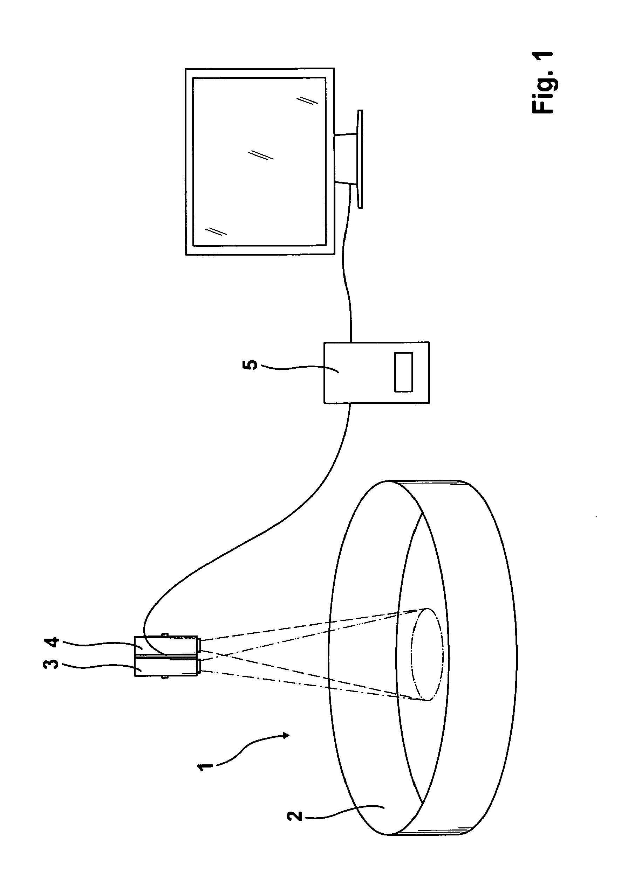

In Fig. 1 ist eine Anordnung zum Erstellen eines Abbildes eines in einer Arena befindlichen Nagetieres dargestellt. Diese Anordnung umfasst eine Arena 1 mit einer kreisrunden Arenawand 2 zur Aufnahme eines Nagetieres, hier einer nicht dargestellten Maus.

Oberhalb der Arena 1 sind zwei Kameras 3 und 4 derart angebracht, dass jede der Kameras 3, 4 die gesamte Arena 1 in einem Bild aufnehmen kann. Dabei sind die Kameras 3, 4 möglichst nah beieinander angeordnet, so dass beide Kameras 3, 4 nahezu den gleichen Bildausschnitt erfassen. Gleichzeitig sind beide Kameras 3, 4 so weit voneinander beabstandet angeordnet, dass aus den gewonnenen Bildern mittels Triangulation eine Anzahl von dreidimensionalen Oberflächenpunkten der Gegenstände und/oder des Nagetieres ermittelt werden können.

Die Kameras 3, 4 sind mit einer Recheneinheit nebst Speicher 5 verbunden, die aus den Oberflächenpunkten ein Höhenprofil des Nagetieres errechnet. Im Speicher sind alle für die Verhaltensanalyse relevanten Verhaltensmuster gespeichert.

Das Höhenprofil wird wie folgt errechnet:
- A.1: optische Erfassung der Arena mit all seinen Objekten ohne Nagetier durch zwei voneinander beabstandete Kameras;
- A.2: ermitteln von Oberflächenpunkten im Raum der erfassten Objekte aus den Bilddaten der beiden Kameras, insbesondere mittels Triangulation;
- A.3: speichern der Oberflächenpunkte der Objekte als Arenadaten;
- A.4: optische Erfassung der Arena mit all seinen Objekten und mit dem Nagetier durch die beiden voneinander beabstandeten Kameras;
- A.5: ermitteln von Oberflächenpunkten im Raum der erfassten Objekte und des erfassten Nagetieres aus den Bilddaten der beiden Kameras, insbesondere mittels Triangulation;
- A.6: speichern der Oberflächenpunkte im Raum der Objekte und des Nagetieres als Arbeitsdaten;
- A.7: extrahieren der Arenadaten von den Arbeitsdaten, insbesondere durch Substraktion der Arenadaten von den Arbeitsdaten, so dass die verbleibenden Oberflächenpunkte ein dreidimensionales Höhenprofil des Nagetieres bilden und speichern des verbleibenden, dreidimensionalen Höhenprofiles des Nagetieres.

Anschließend wird aus den Höhenprofil der Schwerpunkt 8 des Nagetieres im Raum, der Schwanzendpunkt 7 im Raum und die Position der Schnauzenspitze 9 im Raum errechnet. Alles wird dann zusammen mit dem Höhenprofil als Abbild gespeichert.

Aus dem Höhenprofil wird die Schnauzenspitze 9 im Raum dadurch errechnet, dass aus dem Höhenprofil eine zweidimensionale Kontur des Nagetieres bestimmt wird, dass an der Kontur mittels Winkelanalyse ein Abschnitt mit einem spitzen Winkel ermittelt wird, dass dem Scheitelpunkt des spitzen Winkels die X, Y, und Z Koordinate aus dem Höhenprofil zugewiesen wird und dass diese Koordinatenpunkte als Schnauzenspitze 9 gespeichert werden.

Aus dem Höhenprofil wird der Schwanzendpunkt 7 im Raum dadurch errechnet wird, dass aus dem Höhenprofil durch vergleichen mit Standardschwänzen der Schwanz bestimmt wird, dass das freie Ende des Schwanzes als Schwanzendpunkt 7 festgelegt wird, wobei die X, Y und Z Koordinaten des Schwanzendpunktes 7 dem Höhenprofil entnommen werden und dass diese Koordinatenpunkte als Schwanzendpunkt 7 gespeichert werden.

Außerdem ist im Speicher der Recheneinheit für jedes gesuchte Verhaltensmuster eine Referenz-Videosequenz aus einer Anzahl von Referenzabbildern gespeichert. Zur Erstellung einer Verhaltensanalyse werden etwa zwischen 5 und 30 aufeinander folgende Abbilder zu einer Videosequenz zusammengefasst.

Nun wird jede Videosequenz mit allen Referenz-Videosequenzen verglichen und wenn zwischen der Videosequenz und der Referenz-Videosequenz eine genügend hohe Übereinstimmung vorliegt, wird das erkannte Verhaltensmuster in einer deskriptiven Statistik gespeichert.

Nachfolgend wird eine Verhaltensanalyse beispielhaft beschrieben:
1. Aufnahme der leeren Arena 1 durch die beiden Kameras 3, 4; und erstellen eines Abbildes der Objekte der Arena 1 mittels Triangulation;
2. Aufnahme der mit einem Nagetier versehenen Arena 1 durch die beiden Kameras 3, 4 und erstellen eines Abbildes der Objekte der Arena 1 mittels Triangulation;
3. Subtraktion der Aufnahme der leeren Arena 1 von der Aufnahme der mit einem Nagetier versehenen Arena 1, um das Nagetier von allen Objekten, die sich in der Arena befinden, freizustellen;
4. Zur Kontrolle wird das freigestellte Objekt daraufhin untersucht, ob es sich um eine Maus handelt. Dabei werden die Größe des Objektes und das Vorhandensein bestimmter Merkmale wie zum Beispiel ein Schwanz geprüft;
5. Anschließend wird bestimmt, wo sich der Schwanz und der Kopf befindet und die Umrisse der Maus werden ermittelt;
6. Zur Erfassung der Orientierung der Maus wird ermittelt, wo sich der Kopf im Vergleich zum Schwanz befindet, um zum Beispiel herauszufinden, ob die Maus Männchen macht oder ob sich die Maus am Boden befindet;
7. Erkennen der Verhaltensweisen durch die Analyse des zeitlichen Verlaufes der Orientierung der Maus, zum Beispiel zum Erkennen, ob sich die Maus putzt, da hier die aufrechte Position der Maus mit einer charakteristischen Veränderung der Körperwinkel einhergeht.
8. Wiederholen der Schritte 2 bis 7.

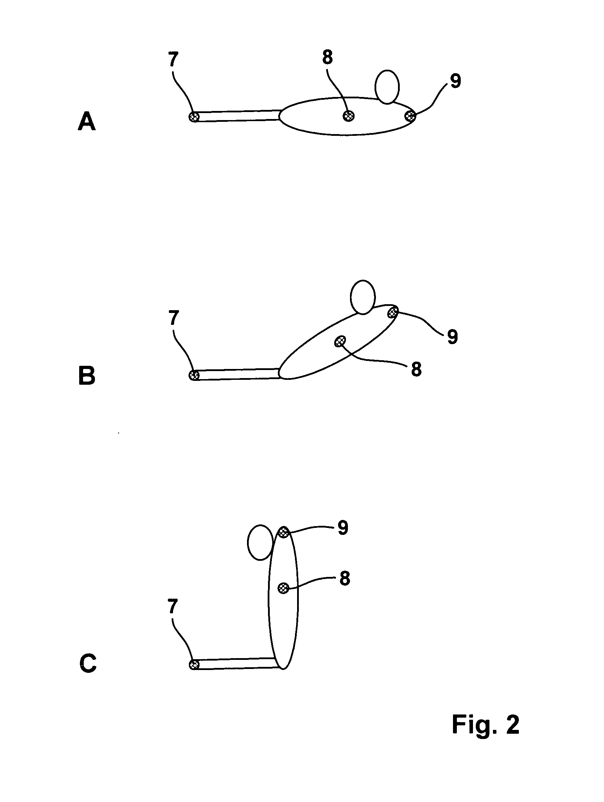

In Fig. 2 ist schematisch eine Kurzsequenz mit 3 Abbildern eines Nagetieres dargestellt, bei dem der Schwanzendpunkt 7, der Schwerpunkt 8 und die Schnauzenspitze 9 bereits ermittelt wurden.

Wird nun über diese 3 Abbilder festgestellt, dass die Schnauzenspitze 9 höher als der Schwerpunkt 8 und der Schwerpunkt 8 höher als der Schwanzendpunkt 7 ist, so wird dieses Verhalten als "Männchen machen" klassifiziert und entsprechend in der deskriptiven Statistik vermerkt.

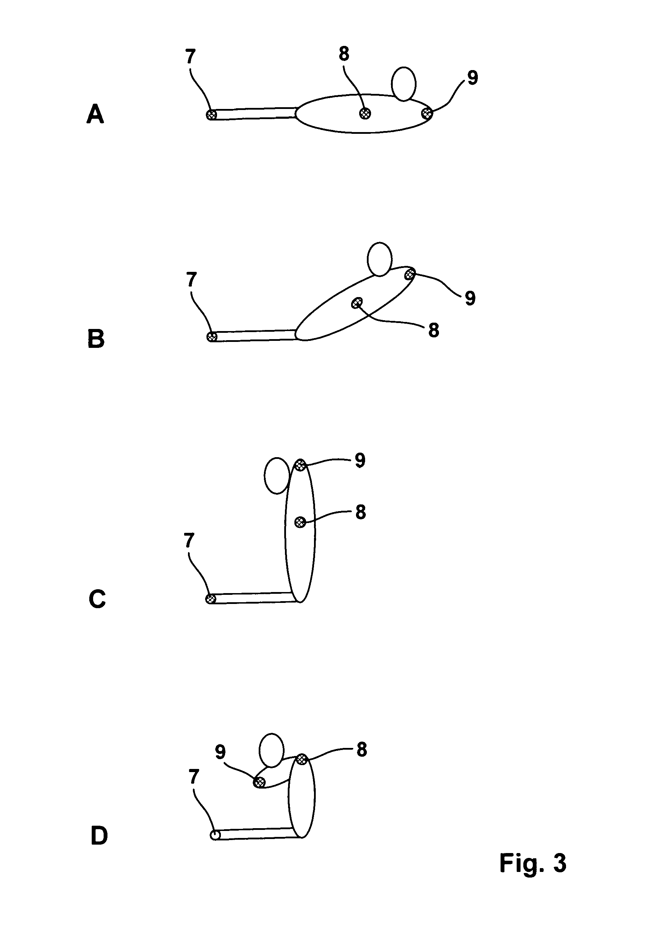

In Fig. 3 ist schematisch eine Kurzsequenz mit 4 Abbildern eines Nagetieres dargestellt, bei dem der Schwanzendpunkt 7, der Schwerpunkt 8 und die Schnauzenspitze 9 bereits ermittelt wurden.

Wird nun über diese 4 Abbilder festgestellt, dass die Schnauzenspitze 9 höher als der Schwerpunkt 8 und der Schwerpunkt 8 höher als der Schwanzendpunkt 7 ist, und wird festgestellt, dass die Schnauzenspitze 9 anschließend auf gleicher Höhe oder sogar unterhalb des Schwerpunktes 8 liegt, so wird dieses Verhalten als "sich putzen" klassifiziert und entsprechend in der deskriptiven Statistik vermerkt.

Eine Videosequenz kann auch aus bis zu 100 Abbildern bestehen und ein oder mehrere Verhaltensmuster umfassen. Dabei hat es sich als vorteilhaft erwiesen, alle 15 bis 100, vorzugsweise alle 40 Millisekunden ein Abbild zu erstellen.

## Patentansprüche

1. Verfahren zur Erstellung eines Abbildes eines in einer Arena (1) befindlichen Nagetieres, insbesondere einer Maus oder einer Ratte, vorzugsweise zur Verwendung in einer Beobachtungsanalyse, **dadurch gekennzeichnet,**
**dass** von zwei voneinander beabstandeten Kameras (3, 4) zwei Bilder des Nagetieres erstellt werden, wobei beide Kameras (3, 4) das Nagetier und/oder die Arena (1) von oben erfassen, dass aus den Bildern ein dreidimensionales Höhenprofil des Nagetieres erstellt wird und dass das Höhenprofil als Abbild des Nagetieres gespeichert wird.

2. Verfahren nach Anspruch 1,
**dadurch gekennzeichnet,**
**dass** das dreidimensionale Höhenprofil durch die folgenden Schritte erstellt wird:
A.1 optische Erfassung der Arena mit all seinen Objekten ohne Nagetier durch zwei voneinander beabstandete Kameras (3, 4);
A.2 ermitteln von Oberflächenpunkten im Raum der erfassten Objekte aus den Bilddaten der beiden Kameras (3, 4);
A.3 speichern der Oberflächenpunkte der Objekte als Arenadaten;
A.4 optische Erfassung der Arena (1) mit all seinen Objekten und mit dem Nagetier durch die beiden voneinander beabstandeten Kameras (3, 4);
A.5 ermitteln von Oberflächenpunkten im Raum der erfassten Objekte und des erfassten Nagetieres aus den Bilddaten der beiden Kameras (3, 4);
A.6 speichern der Oberflächenpunkte im Raum der Objekte und des Nagetieres als Arbeitsdaten;
A.7 extrahieren der Arenadaten von den Arbeitsdaten, so dass die verbleibenden Oberflächenpunkte ein dreidimensionales Höhenprofil des Nagetieres bilden und speichern des verbleibenden, dreidimensionalen Höhenprofiles des Nagetieres.

3. Verfahren nach Anspruch 2,
**dadurch gekennzeichnet,**
**dass** das die Oberflächenpunkte in den Schritten A.2 und A.5 mittels Triangulation der Bilddaten der beiden Kameras (3, 4) ermittelt werden.

4. Verfahren nach einem der Ansprüche 2 oder 3,
**dadurch gekennzeichnet,**
**dass** das Extrahieren in Schritt A.7 durch Subtrahieren der Oberflächenpunkte der Arenadaten von den Oberflächenpunkten der Arbeitsdaten erfolgt, so dass die verbleibenden Oberflächenpunkte ein dreidimensionales Höhenprofil des Nagetieres bilden.

5. Verfahren nach einem der vorangehenden Ansprüche,
**dadurch gekennzeichnet,**
**dass** aus dem Höhenprofil der Schwerpunkt (8) im Raum des Nagetieres errechnet wird und dass das Höhenprofil zusammen mit dem Schwerpunkt (8) als Abbild gespeichert wird.

6. Verfahren nach einem der vorangehenden Ansprüche,
**dadurch gekennzeichnet,**
**dass** aus dem Höhenprofil die Schnauzenspitze (9) im Raum des Nagetieres errechnet wird und dass das Höhenprofil zusammen mit der Schnauzenspitze (9) als Abbild gespeichert wird.

7. Verfahren nach Anspruch 6,
**dadurch gekennzeichnet,**
**dass** aus dem Höhenprofil die Schnauzenspitze (9) im Raum dadurch errechnet wird, dass aus dem Höhenprofil eine zweidimensionale Kontur des Nagetieres bestimmt wird, dass an der Kontur mittels Winkelanalyse ein Abschnitt mit einem spitzen Winkel ermittelt wird, dass dem Scheitelpunkt des spitzen Winkels die X, Y, und Z Koordinate aus dem Höhenprofil zugewiesen wird und dass diese Koordinatenpunkte als Schnauzenspitze (9) gespeichert werden.

8. Verfahren nach einem der vorangehenden Ansprüche,
**dadurch gekennzeichnet,**
**dass** aus dem Höhenprofil der Schwanzendpunkt (7) im Raum des Nagetieres errechnet wird und dass das Höhenprofil zusammen mit dem Schwanzendpunkt (7) als Abbild gespeichert wird.

9. Verfahren nach Anspruch 8,
**dadurch gekennzeichnet,**
**dass** aus dem Höhenprofil der Schwanzendpunkt (7) im Raum dadurch errechnet wird, dass aus dem Höhenprofil durch vergleichen mit Standardschwänzen der Schwanz bestimmt wird, dass das freie ende des Schwanzes als Schwanzendpunkt (7) festgelegt wird, wobei die X, Y und Z Koordinaten des Schwanzendpunktes (7) dem Höhenprofil entnommen werden und dass diese Koordinatenpunkte als Schwanzendpunkt (7) gespeichert werden.

10. Verfahren zur Erstellung einer Verhaltensanalyse eines in einer Arena befindlichen Nagetieres, insbesondere einer Maus oder einer Ratte, unter Verwendung von Bildaufnahmen und einer Recheneinheit nebst Datenspeicher, mit den folgenden Schritten:
A. erstellen eines Abbildes des Nagetieres zu einem bestimmten Zeitpunkt;
B. erstellen weiterer Abbilder des Nagetieres zu verschiedenen Zeitpunkten;
C. zusammenstellen von aufeinander folgenden Abbildern zu einer Videosequenz zur Verfolgung der Bewegungen des Nagetieres;
D. auswerten der Videosequenz durch vergleichen der Bewegungen des Nagetieres mit gespeicherten Verhaltensmustern;
E. klassifizieren der Bewegungen des Nagetieres in eine oder mehrere der Verhaltensmuster;
F. speichern der klassifizierten Verhaltensmuster.
**dadurch gekennzeichnet,**
**dass** das erstellen eines Abbildes in den Schritten A und B mit einem Verfahren gemäß einem der vorangehenden Ansprüche erfolgt.

11. Beobachtungsanalyse nach Anspruch 10,
**dadurch gekennzeichnet,**
**dass** das in Schritt B alle 15 bis 100, vorzugsweise alle 40 Millisekunden ein Abbild des Nagetieres erstellt wird.

12. Beobachtungsanalyse nach einem der Ansprüche 10 oder 11,
**dadurch gekennzeichnet,**
**dass** in Schritt C zwischen 3 und 100, vorzugsweise zwischen 5 und 30 Bilder zu einer Videosequenz zusammengestellt werden.

13. Beobachtungsanalyse nach einem der Ansprüche 10 bis 12,
**dadurch gekennzeichnet,**
**dass** in Schritt F die klassifizierten Verhaltensmuster in einer deskriptiven Statistik gespeichert werden.
